# EUROPÄISCHE PATENTSCHRIFT

(11) **EP 1 319 664 B1**
(45) Veröffentlichungstag und Bekanntmachung des Hinweises auf die Patenterteilung: **17.03.2004**
(21) Anmeldenummer: 02026495.8
(22) Anmeldetag: 28.11.2002
(51) Int. Cl.: C07F 3/06

(54) **Verfahren zur Herstellung von Organozinkhalogeniden aus reaktiven Halogenverbindungen und deren Verwendung**
Process for the preparation of organozinc halogen compounds from reactive halogen compounds and use thereof
Procédé de préparation d' halogénures d'organozinc à partir de composés halogénés réactifs et leur utilisation

(30) Priorität: 13.12.2001 DE 10161335
(43) Veröffentlichungstag der Anmeldung: 18.06.2003
(73) Patentinhaber: Consortium für elektrochemische Industrie GmbH, 81379 München (DE)
(72) Erfinder: Sorger, Klas, Dr., 81371 München (DE); Petersen, Hermann, Dr., 84489 Burghausen (DE); Stohrer, Jürgen, Dr., 82049 Pullach (DE)
(74) Vertreter: Schuderer, Michael, Dr.

(56) Entgegenhaltungen:
- EP-A- 0 562 343
- EP-A- 1 167 325
- DATABASE WPI Section Ch, Week 197634 Derwent Publications Ltd., London, GB; Class A60, AN 1976-64551x XP002230110 "Novel amino ketones preparation by reacting corresponding halo ketones with nitrile using zinc with subsequent acid hydrolysis" & SU 472 127 A (UNIV PERM GORKII), 30. Mai 1975 (1975-05-30)
- FUERSTNER A: "RECENT ADVANCEMENTS IN THE REFORMATSKY REACTION" SYNTHESIS, GEORG THIEME VERLAG. STUTTGART, DE, August 1989 (1989-08), Seiten 571-590, XP000872890 ISSN: 0039-7881

## Beschreibung

Die Erfindung betrifft ein Verfahren zur Herstellung von Organozinkhalogeniden (Halogenzinkverbindungen, Reformatsky-Reagenzien) aus reaktiven Halogenverbindungen und deren Verwendung bei der Umsetzung zu Keto-, Hydroxy- und Aminoverbindungen in Carbonsäureestern.

Die Umsetzung von reaktiven Halogenverbindungen, insbesondere α-Halogencarbonylverbindungen mit elektrophilen Substraten wie z. B. Aldehyden, Ketonen, Iminen, Nitrilen, Carbonsäureanhydriden, -chloriden, Lactonen, Orthoformiaten, Formiaten, Epoxiden, Azirinen, Aminalen und Nitronen in Gegenwart von Zinkmetall, bekannt als Reformatsky-Reaktion, liefert wichtige Synthesebausteine für die Herstellung von pharmazeutischen Wirkstoffen, Duftstoffen und Pflanzenschutzmitteln.
Die Wahl des Lösungsmittels und die Aktivierung des eingesetzten Zinks bzw. der gesamten Reaktionsmischung sind zur Erzielung guter Ausbeuten und hoher Selektivitäten und damit hoher Produktreinheiten von entscheidender Bedeutung.

Es ist bekannt, daß als Lösungsmittel für die Reformatsky-Reaktion Ether wie Diethylether, 1,4-Dioxan, Dimethoxymethan, Dimethoxyethan und insbesondere Tetrahydrofuran besonders geeignet sind. Daneben haben sich als Lösungsmittel auch aromatische Kohlenwasserstoffe oder Gemische der vorstehend genannten Ether mit aromatischen Kohlenwasserstoffen, die Mischung von Tetrahydrofuran und Borsäuretrimethylester oder die polaren Lösungsmittel Acetonitril, Dimethylformamid, Dimethylacetamid, Dimethylsulfoxid und Hexamethylphosphorsäuretriamid bewährt. Eine zusammenfassende Darstellung hierzu ist beispielsweise in A. Fürstner, Synthesis 1989, S. 571-590 enthalten.

Aus EP-A-562 343 ist bekannt, daß die Umsetzung von α-Bromcarbonsäureestern mit Carbonylverbindungen in Gegenwart von Zink in dem Lösungsmittel Methylenchlorid mit hohen Ausbeuten verläuft.

Die Verwendung der genannten Lösungsmittel bzw. Lösungsmittelgemische hat folgende Nachteile:
Die mit Wasser mischbaren Ether 1,4-Dioxan und Tetrahydrofuran sowie die mit Wasser mischbaren polaren Lösungsmittel Acetonitril, Dimethylformamid, Dimethylacetamid, Dimethylsulfoxid und Hexamethylphosphorsäuretriamid lösen sich bei wäßriger Aufarbeitung zur Hydrolyse der gebildeten Zinkverbindungen und Zinksalze in der wäßrigen Phase. Aus Gründen der Wirtschaftlichkeit und zur Verringerung der Abfallmengen ist insbesondere bei Anwendung im technischen Maßstab eine Rückgewinnung der eingesetzten Lösungsmittel aus der wäßrigen Phase, z. B. durch Extraktion oder Destillation erforderlich, was allerdings mit erheblichem Aufwand verbunden ist.

Zudem ist bei Verwendung der vorstehend genannten, mit Wasser mischbaren Lösungsmittel bei Hydrolyse des Reaktionsgemisches üblicherweise der Einsatz von mit Wasser nicht mischbaren organischen Lösungsmitteln wie Ethylacetat oder Methyl-tert.-butylether als Cosolvenzien zur besseren Phasentrennung notwendig. Diese Lösungsmittel müssen zurückgewonnen und vor Wiederverwendung durch Destillation von Verunreinigungen befreit werden, was ebenfalls mit hohem Aufwand verbunden ist. Bei Einsatz von Lösungsmittelgemischen für Reformatsky-Reaktionen erfordert die Rückgewinnung, Trennung und gegebenenfalls Reinigung der einzelnen eingesetzten Lösungsmittel generell erheblichen Mehraufwand.

Ferner neigen Diethylether, 1,4-Dioxan, Dimethoxymethan, Dimethoxyethan und Tetrahydrofuran als Lösungsmittel für Reformatsky-Reaktionen durch Autoxidation zur Bildung von explosiven Peroxiden, was deren Einsatz im technischen Maßstab gefährlich macht, insbesondere bei wiederholter Verwendung nach Rückgewinnung (Gefahr der Anreicherung der explosiven Bestandteile), erschwert oder nur unter großem Aufwand möglich macht.

Die Verwendung von Methylenchlorid als Lösungsmittel, wie aus EP-A-562 343 bekannt, oder anderen halogenierten Kohlenwasserstoffen als Lösungsmittel ist aus Umweltschutzgründen bedenklich und deshalb insbesondere im technischen Maßstab zu vermeiden. Zudem sind viele der vorstehend genannten Lösungsmittel teuer, was die Wirtschaftlichkeit der Reaktion ohne Rückgewinnung des eingesetzten Lösungsmittels zusätzlich beeinträchtigt.

Aus SU 472127 ist die Umsetzung von α-Bromketonen und Zink mit Nitrilen in Ethylacetat als Lösungsmittel zur Herstellung von β-Iminoketonen bekannt. Dabei wird zu aktiviertem Zink in Ethylacetat eine Mischung aus Bromketon und Nitril zugefügt. Dabei wird eine Mischung aus Bromketon (reaktive Halogenverbindung) und Nitril (elektrophiles Substrat) zu aktiviertem Zink zugefügt, wobei gebildetes Organozinkhalogenid (Reformatsky-Reagens) unmittelbar mit dem Substrat reagiert. Für viele Substrate ist die in SU 472127 beschriebene Zugabe einer Mischung aus reaktiver Halogenverbindung und elektrophilem Substrat von großem Nachteil.

Aus EP 1167325 ist die Herstellung von Hydroxy- und Aminoverbindungen durch Umsetzung von Aldehyden, Ketonen und Iminen im Zuge einer Reformatsky-Reaktion in einem Carbonsäureester als Lösungsmittel bekannt. In dem in EP 1167325 beschriebenen Verfahren wird jedoch die eingesetzte reaktive Halogenverbindung zusammen mit den Substraten mit Zink in Kontakt gebracht oder die eingesetzte reaktive Halogenverbindung zu den vorgelegten Substraten und Zink zugegeben.

Bestimmte Substrate, die über weitere funktionelle Gruppen wie beispielsweise Amino- oder Epoxidfunktionalitäten verfügen, reagieren bereits beim Zusammenfügen mit der reaktiven Halogenverbindung (z. B. α-Halogenester, α-Bromketon) unter Bildung unerwünschter Nebenprodukte bevor der eigentliche Kontakt mit dem Zink stattfindet. So ist dem Fachmann z.B. aus X.-P. Gu, I. Ikeda, M. Okahara, Bull. Chem. Soc. Jpn., 1987, 60, S. 397-398 die Reaktion von Aminen oder Epoxiden mit reaktiven Halogenverbindungen wohlbekannt. Das beschriebene Verfahren eignet sich daher nicht für solche Substrate.

Es bestand daher die Aufgabe, ein Verfahren bereitzustellen, daß die aus dem Stand der Technik bekannten Probleme löst.

Gegenstand der Erfindung ist ein Verfahren zur Herstellung von Keto- und Hydroxyverbindungen, dadurch gekennzeichnet, dass in einem ersten Schritt ein Organozinkhalogenid aus einer reaktiven Halogenverbindung mit Zink in einem oder mehreren Carbonsäureestern hergestellt werden, in einem zweiten Schritt das erhaltene Organozinkhalogenid mit einem elektrophilen Reaktionspartner ausgewählt aus der Gruppe enthaltend Epoxid, Nitril oder Carbonsäurehalogenid umgesetzt wird und in einem dritten Schritt das Reaktionsprodukt des zweiten Schritts hydrolisiert wird.

In einer bevorzugten Ausführungsform der Erfindung werden nach dem erfindungsgemäßen Verfahren im ersten Schritt Organozinkhalogenide der allgemeinen Formel (4)

HalZn-R³R⁴C-(X)₁-Y (4)

hergestellt, wobei reaktive Halogenverbindungen der allgemeinen Formel (2)

Hal-R³R⁴C-(X)₁-Y (2)

mit Zink umgesetzt werden, wobei
**R**^{**1**} und **R**^{**2**} Wasserstoff oder einen gegebenenfalls halogen- oder cyanosubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können,
**R**^{**3**}**, R**^{**4**}**, R**^{**5**}**, R**^{**6**} und **R**^{**7**} Wasserstoff, Halogen oder einen gegebenenfalls halogensubstituierten oder cyanosubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können,
**X** ausgewählt wird aus 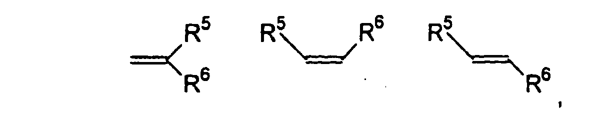 **l** eine ganze Zahl im Wert von 0 oder 1 sein kann,
**Y** CN, (C=O)-Z, (SO₂)-Z, (P=O)(-Z)₂, R⁵C=CR⁶R⁷, C≡C-R⁵
oder ein aromatischer Rest, wobei eine oder mehrere Methineinheiten im Ring durch Gruppen -N= oder -P= ersetzt sein können und der im Ring die Heteroatome -O-, -S- oder -NH- tragen kann, wobei der aromatische Ring gegebenenfalls halogen- oder cyanosubstituiert oder durch C₁-C₃₀-Kohlenwasserstoffreste, in denen eine oder mehrere, einander nicht benachbarte Methyleneinheiten durch Gruppen -O-, -CO-, -COO-, -OCO-, oder -OCOO-, -S- oder -N**R**^{**x**}-ersetzt sein können, substituiert ist,
**Z** einen gegebenenfalls halogensubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können, OH, OR¹, OSi(R³)₃, NHR¹ oder NR¹R²,
**Hal** Chlor, Brom oder Iod bedeutet,
**R**^{**x**} Wasserstoff oder einen gegebenenfalls halogensubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S-, -NH- oder -N-C₁-C₂₀-Alkyl ersetzt sein können und in dem eine oder mehrere Methineinheiten durch Gruppen -N= oder -P= ersetzt sein können, und
jeweils 2 Reste, die ausgewählt werden aus den Paaren **R**^{**1**} und **R**^{**2**}**, R**^{**3**} und **R**^{**4**}**, R**^{**4**} und **R**^{**5**}**, R**^{**5**} und **R**^{**6**}**, R**^{**6**} und **R**^{**7**}**, R**^{**1**} und **R**^{**3**}**, R**^{**1**} und **Y, R**^{**1**} und **Z, R**^{**3**} und **Y, R**^{**3**} und **Z, R**^{**5**} und **Y, R**^{**5**} und Z, wobei **Z** eine direkte Bindung bedeuten kann, miteinander verknüpft sein können.

Bevorzugt eignet sich das erfindungsgemäße Verfahren zur Herstellung von Keto- und Hydroxyverbindungen der allgemeinen Formel (1)

R¹(R²)ₖC(W^{x})-R³R⁴C-(X)₁-Y (1)

, wobei im zweiten Schritt als elektrophile Reaktionspartner

Epoxide der allgemeinen Formel (5b) 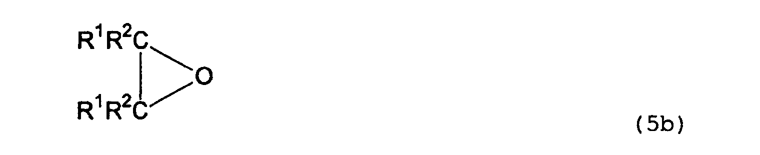 oder Nitrile der allgemeinen Formel (5c)

R¹C≡N (5c)

oder Carbonsäurehalogenide der allgemeinen Formel (5d)

R¹(C=O)-Hal (5d)

verwendet werden, wobei
- **W**^{**x**}: OH, NHR¹ oder =O und
- **W**: O oder NR¹ bedeuten kann,
- **k**: für **W**^{**x**} gleich OH und NHR¹ den Wert 1 und für **W**^{**x**} gleich =O den Wert 0 haben soll, und
die übrigen Reste, die in Anspruch 2 beschriebene Bedeutung haben sollen, sowie
jeweils 2 Reste, die ausgewählt werden aus den Paaren **R**^{**1**} und **R**^{**2**}**, R**^{**3**} und **R**^{**4**}**, R**^{**4**} und **R**^{**5**}**, R**^{**5**} und **R**^{**6**}**, R**^{**6**} und **R**^{**7**}**, R**^{**1**} und **R**^{**3**}**, R**^{**1**} und **Y, R**^{**1**} und **Z, R**^{**3**} und **Y, R**^{**3**} und **Z, R**^{**5**} und **Y, R**^{**5**} und **Z, W**^{**x**} und **Y** sowie **W**^{**x**} und **Z,** wobei **W**^{**x**} O- oder NR¹- bedeutet und **Z** eine direkte Bindung bedeuten kann, miteinander verknüpft sein können.

Es wurde überraschend gefunden, daß Carbonsäureester einerseits geeignete Lösungsmittel für die Herstellung von Organozinkhalogeniden (Reformatsky-Reagenzien) aus reaktiven Halogenverbindungen und Zink sind.
Darüber hinaus sind Carbonsäueester auch für weitere Umsetzungen der Halogenzinkverbindungen mit elektrophilen Substraten (Reformatsky-Reaktion), insbesondere mit Aldehyden, Ketonen, Iminen - wobei die vorgenannten Substrate nicht zum Gegenstand der beanspruchten Erfindung gehören - Nitrilen, Carbonsäurehalogeniden und Epoxiden sowie die sich in einem weiteren Reaktionschritt anschließende Hydrolyse der so erhaltenen Reaktionsprodukte hervorragend geeignet. Auf diese Weise lassen sich insbesondere Keto-, Hydroxy- und Aminoverbindungen herstellen.

Durch Verwendung von Carbonsäureester als Lösungsmittel wird es möglich, die Reaktion insbesondere im technischen Maßstab ohne Zusatz weiterer Lösungsmittel oder Cosolvenzien oder der Verwendung von Lösungsmittelgemischen mit hohen Ausbeuten und Selektivitäten durchzuführen, bei gleichzeitiger einfacher Rückgewinnung des eingesetzten Lösungsmittels und folglich umweltfreundlich und kostengünstig, da die Abfallmengen deutlich reduziert werden können.

Die nach dem erfindungsgemäßen Verfahren im ersten Schritt hergestellten Reformatsky-Reagenzien in Form von in Carbonsäureestern gelösten Organozinkhalogeniden sind überraschender Weise über lange Zeiträume auch bei höheren Temperaturen als reaktive metallorganische Zwischenprodukte stabil und können unmittelbar oder erst zu einem späteren Zeitpunkt in sich anschließenden Reaktionsschritten, insbesondere mit elektrophilen Substraten, weiter umgesetzt werden.

Die nach dem erfindungsgemäßen Verfahren im ersten Schritt hergestellten Reformatsky-Reagenzien in Form von in Carbonsäureestern gelösten Organozinkhalogeniden stellen demnach reaktionsfertige Lösungen und universell anwendbare Ausgangsverbindungen für Umsetzungen mit Elektrophilen dar, insbesondere für Refomatsky-Reaktionen.

Nach dem vorstehend beschriebenen, erfindungsgemäßen Verfahren lassen sich Keto- und Hydroxyverbindungen der allgemeinen Formel (1) in sehr hohen Ausbeuten von bis zu > 90 % und sehr hohen Reinheiten einfach und bei gleichzeitig sehr guten Raum-Zeit-Ausbeuten gewinnen.

Das erfindungsgemäße Verfahren gestaltet sich besonders im technischen Maßstab einfach, da die Reaktion in den kommerziell erhältlichen Carbonsäureestern der allgemeinen Formel (3) als Lösungsmittel durchgeführt werden kann, ohne daß eine Vorbehandlung dieser Lösungsmittel wie z. B. Destillation oder Trocknung notwendig ist.

Die sich anschließenden Reaktionsschritte in Form weiterer Umsetzungen mit Elektrophilen, insbesondere von Reformatsky-Reaktionen erfordern weder für die Durchführung der Reaktion noch für die Aufarbeitung den Zusatz eines weiteren Lösungsmittels wie z. B. eines Cosolvens zur besseren Phasentrennung bei der Aufarbeitung. Da keine Lösungsmittelgemische eingesetzt werden müssen, gestaltet sich die Rückgewinnung der verwendeten Lösungsmittel sehr einfach. Die bevorzugt verwendeten Carbonsäureester der allgemeinen Formel (3) lösen sich wenig oder nur sehr geringfügig in Wasser und können somit beispielsweise bei der Produktisolierung leicht und effizient zurückgewonnen werden, was die Reaktion sehr wirtschaftlich macht. So läßt sich z. B. Ethylacetat, Isopropylacetat oder Butylacetat als Lösungsmittel der allgemeinen Formel (3) bei der Isolierung der hergestellten Produkte durch Destillation in sehr hohen Ausbeuten zurückgewinnen.

Die erfindungsgemäßen Verfahren ermöglichen zudem den Ersatz von halogenhaltigen Kohlenwasserstoffen und gegenüber Peroxidbildung empfindlichen Ethern durch Carbonsäureester der allgemeinen Formel (3) als Lösungsmittel, wodurch die erfindungsgemäßen Verfahren nicht nur umweltfreundlicher sondern auch mit einem deutlich reduzierten Gefahrenpotenzial verbunden sind.

Ferner ist die Produktausbeute und -qualität der nach der erfindungsgemäßen Verfahrensvariante hergestellten Keto- und Hydroxyverbindungen der allgemeinen Formel (1) gegenüber vorbekannten, in der Literatur beschriebenen Varianten in vielen Fällen erhöht. Die Verwendung von Carbonsäureestern der allgemeinen Formel (3) ist für den Verlauf der Reaktion, die Produktausbeuten und -reinheiten und die Eliminierung von Nebenreaktionen von besonderem Vorteil.

Zudem kann bei den erfindungsgemäßen Verfahren in den meisten Fällen mit einem geringeren Überschuß an Zink und reaktiver Halogenverbindung der allgemeinen Formel (2), bezogen auf den elektrophilen Reaktionspartner, gearbeitet werden, wobei die Produktausbeute und -qualität in vielen Fällen höher ist als bei vorbekannten Varianten unter Verwendung der erwähnten, vorbekannten Lösungsmittel, was das erfindungsgemäße Verfahren besonders wirtschaftlich macht.

Darüber hinaus ermöglicht das erfindungsgemäße Verfahren vorteilhaft, dass auch elektrophile Substrate zur Reaktion gebracht werden können, die über nukleophile funktionelle Gruppen (z. B. Aminogruppen) bzw. nukleophile Eigenschaften (z. B. Epoxide) verfügen und bereits vor Kontakt mit dem Zink mit der reaktiven Halogenverbindung unter Bildung unerwünschter Nebenprodukte reagieren. Das nach dem erfindungsgemäßen Verfahren im ersten Reaktionsschritt aus reaktiver Halogenverbindung und Zink hergestellte Organozinkhalogenid wird im zweiten Reaktionsschritt mit diesen Substraten (z. B. Epoxiden oder Substraten mit Aminogruppen) in hohen Ausbeuten und hohen Reinheiten zu den gewünschten Produkten umgesetzt (vgl. Beispiel 5).
Zudem ist möglich, die im ersten Schritt des erfindungsgemäßen Verfahrens hergestellten Organozinkhalogenide in einem zweiten Schritt unter milden Bedingungen bei niedriger Temperatur mit den Elektrophilen unter Erzielung hoher Ausbeuten und insbesondere hoher Reinheiten zur Reaktion zu bringen. Damit lassen sich besonders empfindliche und bei höheren Temperaturen wie zur Herstellung der Organozinkhalogenide im ersten Schritt erforderlich instabile elektrophile Reaktionspartner wie z. B. Epoxide mit hohen Ausbeuten und Produktreinheiten umsetzten. Wird dagegen wie in SU 472127 beschrieben eine Mischung aus Bromessigsäureester und Styroloxid bei erhöhter Temperatur von 55-65 °C mit Zink zur Reaktion gebracht, dann findet aufgrund der drastischen Reaktionsbedingungen eine Zersetzung der Reaktionsmischung unter Bildung unerwünschter Nebenprodukte statt (vgl. Vergleichsbeispiel 7).

Ferner lassen sich die im ersten Reaktionsschritt hergestellten Organozinkhalogenide vor Umsetzung mit dem elektrophilen Reaktionspartner zunächst stabil lagern oder zwischenlagern. Dies ist insbesondere bei technischer Umsetzung vorteilhaft, da sich auf diese Weise technische Produktionsabläufe zeitlich, personell und in ihrer Kapazität optimal gestalten und parallelisieren lassen, was das erfindungsgemäße Verfahren insbesondere bei Durchführung im technischen Maßstab besonders wirtschaftlich macht.

Die C₁-C₃₀-Kohlenwasserstoffreste für **R**^{**1**}**, R**^{**2**}**, R**^{**3**}**, R**^{**4**}**, R**^{**5**} und **Z** sind vorzugsweise lineare, verzweigte oder cyclische C₁-C₂₀-Alkyl-, C₃-C₂₀-Alkoxycarbonylalkyl-, C₂-C₂₀-Alkenyl-, C₅-C₂₀-Acetalalkenyl-, C₃-C₂₀-Alkoxycarbonylalkylreste, die substituiert sein können durch F, Cl, Br, J, CN und C₁-C₈-Alkoxyreste; Aryl-, Aralkyl-, Alkaryl-, Aralkenyl-, Alkenylarylreste, in denen eine oder mehrere Methineinheiten durch Gruppen -N= oder -P=, und Methyleneinheiten durch -O-, -S-, -NH- ersetzt sein können und die substituiert sein können durch F, Cl, Br, J, CN, C₁-C₁₀-Alkoxyreste und C₁-C₂₀-Alkylaminoreste und am Ring durch C₁-C₁₀-Alkylreste und die im Ring die Heteroatome -O-, -S- oder -NH- tragen können. Die Reste **R**^{**1**} und **R**^{**2**}**, R**^{**3**} und **R**^{**4**}**, R**^{**4**} und **R**^{**5**}**, R**^{**5**} und **R**^{**6**}**, R**^{**6**} und **R**^{**7**}**, R**^{**1**} und **R**^{**3**}**, R**^{**1**} und **Y, R**^{**1**} und **Z, R**^{**3**} und **Y, R**^{**3**} und **Z, R**^{**5**} und **Y, R**^{**5**} und **Z, W**^{**x**} und **Y** sowie **W**^{**x**} und **Z,** wobei **W**^{**x**} O- oder NR¹- bedeutet und **Z** eine direkte Bindung bedeuten kann, können miteinander verknüpft sein. Die Reste **R**^{**1**} und **R**^{**3**}**, R**^{**1**} und **Y, R**^{**1**} und **Z, W**^{**x**} und **Y** sowie **W**^{**x**} und **Z,** wobei **W**^{**x**} O- oder NR¹- bedeutet und **Z** eine direkte Bindung bedeuten kann, können durch intramolekulare Reaktion miteinander verknüpft sein.

Die Halogenreste **R**^{**3**}**, R**^{**4**}**, R**^{**5**}**, R**^{**6**} und **R**^{**7**} sind vorzugsweise F und Cl.
Insbesondere bedeutet 1 den Wert 0.

Als reaktive Halogenverbindungen der allgemeinen Formel (2) werden Bromverbindungen, wobei Hal in der allgemeinen Formel (2) Brom bedeutet, bevorzugt eingesetzt. Bevorzugt sind reaktive Halogenverbindungen der allgemeinen Formel (2), bei der **Y** die Bedeutung **(C=O)-Z** hat. Weiterhin sind reaktive Halogenverbindungen der allgemeinen Formel (2) bevorzugt, bei denen **Z** die Bedeutung **OR**^{**1**} hat. Insbesondere sind als reaktive Halogenverbindungen der allgemeinen Formel (2) α-Bromcarbonsäureester bevorzugt.
Bei der erfindungsgemäßen Verwendung von Organozinkhalogeniden in einem Verfahren zur Herstellung von Keto- und Hydroxyverbindungen wird vorzugsweise in einem ersten Schritt Zink in dem Carbonsäureester der allgemeinen Formel (3) vorgelegt und anschließend die reaktiven Halogenverbindungen der allgemeinen Formel (2) zugegeben, gegebenenfalls gelöst in einem Lösungsmittel.
In einem zweiten Schritt werden zur Lösung der im ersten Schritt erhaltenen Organozinkhalogenide der allgemeinen Formel (4) geeignete elektrophile Substrate, bevorzugt Aldehyde, Ketone, Imine -wobei die vorgenannten Substrate nicht zum Gegenstand der beanspruchten Erfindung gehören - Epoxide, Nitrile und Carbonsäurehalogenide der allgemeinen Formeln (5a) bis (5d), gegebenenfalls gelöst in einem Lösungsmittel, zugegeben.

Ebenfalls bevorzugt wird die Lösung der im ersten Schritt erhaltenen Organozinkhalogenide der allgemeinen Formel (4) in einem zweiten Schritt zu geeigneten elektrophilen Substraten, bevorzugt Aldehyden, Ketonen, Iminen -wobei die vorgenannten Substrate nicht zum Gegenstand der beanspruchten Erfindung gehören - Epoxiden, Nitrilen und Carbonsäurehalogeniden der allgemeinen Formeln (5a) bis (5d), gegebenenfalls gelöst in einem Lösungsmittel, zugegeben.

Aus A. Fürstner, Synthesis 1989, S. 571-590 und K. Nützel in Houben-Weyl, Methoden der organischen Chemie, 4. Auflage, Band XIII/2a, Stuttgart 1973, S. 828-832 ist bekannt, daß α-Bromozinkester (Reformatsky-Reagenzien) der allgemeinen Formel (4) mit bestimmten reaktiven Carbonsäureestern, und zwar cyclischen Carbonsäureestern (Lactonen), Ameisensäureestern, Ameisensäureorthoestern und Benzoesäureestern reagieren können.

Andere als die vorstehend genannten reaktiven Carbonsäureester sind gegenüber α-Bromozinkestern nicht reaktiv. In Ausnahmefällen findet eine Umsetzung entweder bei Verwendung koordinierender oder polarer Lösungsmittel (z. B. 1,4-Dioxan oder Dimethylsulfoxid) oder bei langen Reaktionszeiten und gleichzeitig hohen Temperaturen statt.

Überraschender Weise sind die nach dem erfindungsgemäßen Verfahrens hergestellten Organozinkhalogenide (Reformatsky-Reagenzien) der allgemeinen Formel (4) in den im erfindungsgemäßen Verfahren als Lösungsmittel verwendeten Carbonsäureestern der allgemeinen Formel (3) auch bei erhöhten Temperaturen hinreichend lange stabil und lagerbar (siehe Beispiele) und lassen sich in sich anschließenden Reaktionsschritten durch Umsetzung mit elektrophilen Substraten und Hydrolyse direkt zu Keto- und Hydroxyverbindungen umsetzen, was nach der aus dem Stand der Technik bekannten Lehre nicht zu erwarten gewesen wäre.

Während der Herstellung der Organozinkhalogenide nach dem erfindungsgemäßen Verfahren hält man im allgemeinen die Temperatur der exothermen Reaktion -gegebenenfalls durch Kühlung - auf einem vorgegebenen Wert. Dabei kann die obere Temperaturgrenze durch den Siedepunkt des eingesetzten Lösungsmittels der allgemeinen Formel (3), wie z. B. Ethylacetat (Kp.: 77 °C) oder Essigsäureisopropylester (Kp.: 87-89 °C) begrenzt sein. Bei höhersiedenden Lösungsmitteln der allgemeinen Formel (3), wie z. B. Essigsäure-n-butylester (Kp.: 124-126 °C) wird die Temperatur der Reaktion vorzugsweise durch Kühlung kontrolliert. Die Reaktion wird vorzugsweise bei Temperaturen von -20 bis +150 °C, besonders bevorzugt bei 20 bis 110 °C, insbesondere bei 40 bis 90 °C durchgeführt.

Zink wird im allgemeinen in Form von Folien, Band-, Span-, Pulver- oder Staubform oder in Form von Zinkwolle eingesetzt. Die Anwesenheit andere Metalle wie Kupfer, Silber oder Quecksilber ist nicht erforderlich. Insbesondere wird Zink in Form von kommerziell erhältlichem, handelsüblichem Zinkpulver oder Zinkstaub eingesetzt, bevorzugt ist Zink hoher Reinheit von mindestens 99.995 %,besonders bevorzugt ist Zinkstaub, der aus Zink mit einer Reinheit von mindestens 99.995 % gewonnen wird.

Zur Erzielung hoher Produktausbeuten hat es sich im allgemeinen bewährt, das Zink vor Zugabe der reaktiven Halogenverbindung der allgemeinen Formel (2) zu aktivieren. Zur Zinkaktivierung sind vorbekannte, beispielsweise in der zusammenfassenden Darstellung von A. Fürstner, Synthesis 1989, S. 571-590, genannte, üblicherweise verwendete Methoden geeignet. Besonders bewährt haben sich die Wäsche des Zinks mit Säure, die Aktivierung durch Iod wie in EP-A-562 343 beschrieben und die Aktivierung durch Trimethylchlorsilan, wobei die Aktivierung durch Trimethylchlorsilan aufgrund ihrer einfachen Durchführbarkeit und der gesteigerten Ausbeuten, Produktreinheiten und Selektivitäten sowie der Unterdrückung von Nebenreaktionen besonders bevorzugt ist. Aus G. Picotin, P. Miginiac, J. Org. Chem. 1987, 52, S. 4796, ist die Aktivierung von Zink durch Trimethylchlorsilan in dem Lösungsmittel Diethylether bekannt.

Zur Aktivierung von Zink mit Trimethylchlorsilan wird das Zink in dem Carbonsäureester der allgemeinen Formel (3) vorgelegt, dann Trimethylchlorsilan zugegeben und die Mischung für 10 min bis 2 h, bevorzugt 10 bis 45 min bei Temperaturen von 30 bis 150 °C, insbesondere bei 40 bis 120 °C, besonders bevorzugt bei 50 bis 90 °C erhitzt. Es hat sich bewährt, das Zink mit Trimethylchlorsilan im Molverhältnis 1 : (0.005 bis 0.5), insbesondere 1 : (0.03 bis 0.3) in dem Carbonsäureester der allgemeinen Formel (3) unter Erwärmung auf die gewünschte Temperatur umzusetzen.

Zur Aktivierung der Reaktionsmischung können auch Zusatzstoffe wie Kupfer-, Chrom-, Mangan-, Cobalt-, Bismut-, Samarium-, Scandium-, Indium-, Titan-, Cer-, Tellur-, Zinn-, Blei-, Antimon-, Germanium-, Aluminium-, Magnesium-, Palladium-, Nickel- und Quecksilberverbindungen oder gegebenfalls deren Mischungen eingesetzt werden.

Als Carbonsäureester können für die erfindungsgemäßen Verfahren vorzugsweise Carbonsäureester der allgemeinen Formel (3)

R⁸-((O(CH₂)ₘ)ₙ-COO-((CH₂)ₒ-COO)ₚ-((CH₂)_{q}O)ᵣ-R⁹ (3)

verwendet werden, wobei
**R**^{**8**} und **R**^{**9**} einen C₁-C₃₀-Kohlenwasserstoffrest, in dem eine oder mehrere, einander nicht benachbarte Methyleneinheiten durch Gruppen -O- ersetzt sein können, und
**m, n, o, p, q,** und **r** ganze Zahlen im Wert von 0 bis 6 bedeuten.

Insbesondere bevorzugt sind dabei solche Carbonsäureester der allgemeinen Formel (3), in denen **R**^{**8**} und **R**^{**9**} vorzugsweise für geradkettige, verzweigte oder cyclische C₁-C₁₀-Alkyl-, C₆-C₁₀-Aralkyl-, C₂-C₁₀-Alkoxyalkylreste oder C₅-C₁₀-Arylreste stehen. Insbesondere stehen **R**^{**8**} und **R**^{**9**} für geradkettige oder verzweigte C₁-C₈-Alkylreste.

Vorzugsweise bedeuten **m, n, o, p, q,** und **r** ganze Zahlen im Wert von 0, 1, 2 oder 3. Insbesondere bedeuten **n** und **p** und **r** die Werte 0.

Besonders bevorzugte Carbonsäureester der allgemeinen Formel (3) sind insbesondere Methyl-, Ethyl-, n-Propyl-, i-Propyl-, n-Butyl-, i-Butyl-, t-Butyl-, n-Hexyl-, n-Pentyl-, i-Pentylester der Essigsäure, Propionsäure und Buttersäure und Essigsäurealkyl(C₆-C₁₄)ester-Gemische. Die Ester und die Essigsäurealkyl(C₆-C₁₄)ester-Gemische können bei der Isolierung der hergestellten Produkte in sehr hoher Ausbeute zurückgewonnen und erneut eingesetzt werden. Bei Verwendung des kostengünstigen Methylacetats als Lösungsmittel der allgemeinen Formel (3) kann auf eine Rückgewinnung verzichtet werden.

Nach erfolgter Umsetzung und erfindungsgemäßer Herstellung der Organozinkhalogenide im ersten Schritt wird die Reaktionsmischung im zweiten Schritt üblicherweise bei Temperaturen von -100 bis +200 °C, besonders bevorzugt von -50 bis +130 °C, insbesondere bei -30 bis +80 °C mit elektrophilen Substraten versetzt, wobei man vorzugsweise die Temperatur der exothermen Reaktion gegebenenfalls durch Kühlung auf einem vorgegebenen Wert hält. Dabei kann die obere Temperaturgrenze durch den Siedepunkt des eingesetzten Lösungsmittels der allgemeinen Formel (3), wie z. B. Ethylacetat (Kp.: 77 °C) begrenzt sein. Vorzugsweise wird die Temperatur der Reaktion durch Kühlung kontrolliert.

Alternativ dazu kann man auch das Reaktionsgemisch zu den elektrophilen Substraten zusetzen. Die im ersten Schritt hergestellten Organozinkhalogenide der allgemeinen Formel (4) können auch nach Abkühlung der Reaktionsmischung bei Temperaturen von -20 bis +30 °C zunächst stabil gelagert und zu einem späteren Zeitpunkt mit elektrophilen Reaktionspartnern zur Reaktion gebracht werden.

Nach Ende der Zugabe aller beteiligten Bestandteile im zweiten Schritt läßt man vorzugsweise noch 5 min bis 24 h, besonders bevorzugt 5 min bis 12 h, insbesondere 5 min bis 8 h nachreagieren, um die Umsetzung zu vervollständigen. Bei Reaktionstemperaturen von 20 bis 90 °C beträgt die Nachreaktionszeit vorzugsweise 5 min bis 2 h, insbesondere 5 bis 30 min.

Überschüssiges Zinkmetall kann durch Filtration.abgetrennt werden. Es ist auch möglich, überschüssiges Zink in der im dritten Schritt zur Hydrolyse der Reaktionsmischung verwendeten Säure aufzulösen.

Es hat sich bewährt, das Zink mit der reaktiven Halogenverbindung der allgemeinen Formel (2) und dem elektrophilen Substrat der allgemeinen Formeln (5a) bis (5d) im Molverhältnis (1 bis 3) : (1 bis 2) : 1, insbesondere (1.1 bis 1.7) : (1 bis 1.3) : 1 in dem Carbonsäureester der allgemeinen Formel (3) als Lösungsmittel umzusetzen.

Darüber hinaus erweisen sich die erfindungsgemäßen Verfahren gegenüber vorbekannten Verfahrensvarianten als vorteilhaft, da in vielen Fällen, insbesondere bei Reaktionstemperaturen von 20 bis 80 °C, die Nachreaktionszeit mit 5 bis 30 min deutlich verkürzt ist, wodurch insbesondere im technischen Maßstab sehr gute Raum-Zeitausbeuten und damit eine hohe Wirtschaftlichkeit erreicht wird. Sehr kurze Nachreaktionszeiten ergeben sich insbesondere nach Aktivierung der Reaktionsmischung bzw. des Zinks durch Trialkylchlorsilan in dem Carbonsäureester der allgemeinen Formel (3) als Lösungsmittel.

Nach erfolgter Umsetzung im zweiten Schritt wird die Reaktionsmischung im dritten Schritt üblicherweise bei Temperaturen von -80 bis +90 °C, besonders bevorzugt von -50 bis +50 °C, insbesondere bei -30 bis +30 °C durch Zugabe einer wässrigen Säure oder Base hydrolysiert, wobei sich gebildete Zinkverbindungen und Zinksalze auflösen. Alternativ dazu kann man auch das Reaktionsgemisch zu einer wässrigen Säure oder Base zusetzen.

Bevorzugte Basen für die Hydrolyse sind Ammoniak und organische Amine, wie Trialkylamine und Alkanolamine.

Bevorzugte Säuren für die Hydrolyse sind Brönstedt-Säuren, insbesondere starke Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluß-, Jodwasserstoff-, Bromwasserstoff-, Perchlor-, Hexafluorophosphorsäure, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Citronen-, Croton-, Ameisen-, Fumar-, Malein-, Malon-, Gallus-, Itacon-, Milch-, Wein-, Oxal-, Phthal- und Bernsteinsäure.

Insbesondere wird Ammoniak, Salzsäure, Schwefelsäure, Citronensäure oder Essigsäure, bevorzugt Ammoniak, Salzsäure und Schwefelsäure eingesetzt. Die Säure oder Base kann in konzentrierter Form oder in Form einer verdünnten wässrigen Lösung eingesetzt werden.

Die hergestellten Produkte der allgemeinen Formel (1) können nach bekannten, üblicherweise verwendeten Methoden wie Extraktion, Destillation, Kristallisation oder mittels chromatographischer Methoden isoliert werden. In den meisten Fällen ist das nach Entfernung des Lösungsmittels erhaltene Rohprodukt von sehr hoher bzw. ausreichender Reinheit und kann unmittelbar in nachfolgenden Reaktionen und Umsetzungen, insbesondere Esterhydrolysen eingesetzt werden.

Der Druckbereich der Reaktion ist unkritisch und kann innerhalb weiter Grenzen variiert werden. Der Druck beträgt üblicherweise 0.01 bis 20 bar, bevorzugt wird die Reaktion unter Normaldruck (Atmosphärendruck) durchgeführt.

Die Reaktion wird bevorzugt unter Inertisierung mit Schutzgas, wie Stickstoff oder Argon durchgeführt. Die Reaktion kann kontinuierlich oder diskontinuierlich, bevorzugt diskontinuierlich durchgeführt werden.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Vergleichsbeispiel 1:

### Herstellung von 3-Hydroxy-3-phenylpropionsäure-tert.-butylester

Bei Raumtemperatur wurden in einem Dreihalskolben mit Rückflußkühler, Innenthermometer, Tropftrichter und Rührer unter Stickstoff-Schutzgas 8 g Zinkpulver (122 mmol) in 47 ml Ethylacetat vorgelegt. Nachdem 1.9 ml Trimethylchlorsilan (15 mmol) zugefügt wurden, erwärmte man die Mischung 15 min auf 60 °C, ließ dann auf 55 °C abkühlen und tropfte anschließend innerhalb 5 min 22 g Bromessigsäure-*tert*.-butylester (113 mmol) unverdünnt zu, wobei die Temperatur durch externe Kühlung bei 65 °C gehalten wurde. Dann wurde die Mischung 10 min bei 50 °C gerührt. Nach Abkühlung auf 0 °C fügte man 10 g Benzaldehyd (94 mmol) unverdünnt zu, wobei die Temperatur durch externe Kühlung bei 10 °C gehalten wurde. Nachdem 90 min bei 25 °C und 15 min bei 35 °C gerührt wurde, fügte man 40 ml Ethylacetat zu, kühlte die Mischung auf 15 °C ab, säuerte mit 17 ml 20 %-iger Salzsäure bis zu einem pH-Wert von 1-2 an und rührte die Mischung 10 min, wobei sich überschüssiges Zink auflöste. Anschließend wurde die organische Phase abgetrennt. Die organische Phase wurde dann bei 25 °C mit 15 ml konzentrierter Ammoniak-Lösung 10 min gerührt. Nach Phasentrennung wurde über Natriumsulfat getrocknet und das Lösungsmittel im Vakuum abdestilliert. 3-Hydroxy-3-phenylpropionsäure-*tert*.-butylester wurde in einer Ausbeute von 20.3 g (97 % d. Th.) mit einem Siedepunkt von 102 °C (1.5 mbar) erhalten.

Analoge Herstellung in den Lösungsmitteln Methylacetat, Isopropylacetat und *n*-Butylacetat lieferte 3-Hydroxy-3-phenylpropionsäure-*tert*.-butylester in Ausbeuten von 19.9 g, 20.5 g und 20.1 g (95, 98 bzw. 96 % d. Th.).

### Vergleichsbeispiel 2:

### Herstellung von 3-Hydroxy-3-phenylpropionsäuremethylester

Bei Raumtemperatur wurden in einem Dreihalskolben mit Rückflußkühler, Innenthermometer, Tropftrichter und Rührer unter Stickstoff-Schutzgas 7.6 g Zinkpulver (115 mmol) in 45 ml Isopropylacetat vorgelegt. Nachdem 1.83 ml Trimethylchlorsilan (14 mmol) zugefügt wurden, erwärmte man die Mischung 15 min auf 60 °C, ließ dann auf 55 °C abkühlen und tropfte anschließend innerhalb 5 min 16.3 g Bromessigsäuremethylester (107 mmol) unverdünnt zu, wobei die Temperatur durch externe Kühlung bei 60 °C gehalten wurde. Dann wurde die Mischung 15 min bei 50 °C gerührt. Nach Abkühlung auf 30 °C fügte man 9.4 g Benzaldehyd (89 mmol) unverdünnt zu, wobei die Temperatur durch externe Kühlung bei 40 °C gehalten wurde. Nachdem 30 min bei 40 °C gerührt wurde, kühlte man die Mischung auf 0 °C ab, säuerte mit 20 ml 20 %-iger Salzsäure bis zu einem pH-Wert von 1 an und rührte die Mischung 30 min, wobei sich überschüssiges Zink auflöste. Anschließend wurde die organische Phase abgetrennt. Die organische Phase wurde dann bei 0 °C mit 30 ml konzentrierter Ammoniak-Lösung 10 min gerührt. Nach Phasentrennung wurde über Natriumsulfat getrocknet und das Lösungsmittel im Vakuum abdestilliert. 3-Hydroxy-3-phenylpropionsäuremethylester wurde in einer Ausbeute von 14.3 g (89 % d. Th.) mit einem Siedepunkt von 78 °C (0.08 mbar) erhalten.

Bei Verwendung von Bromessigsäureethylester konnte 3-Hydroxy-3-phenylpropionsäureethylester in einer Ausbeute von 91 % d. Th. hergestellt werden.

### Vergleichsbeispiel 3:

### Herstellung von 3-Hydroxydecansäuremethylester

Bei Raumtemperatur wurden in einem Dreihalskolben mit Rückflußkühler, Innenthermometer, Tropftrichter und Rührer unter Stickstoff-Schutzgas 7.1 g Zinkpulver (108 mmol) in 42 ml Ethylacetat vorgelegt. Nachdem 1.7 ml Trimethylchlorsilan (13.4 mmol) zugefügt wurden, erwärmte man die Mischung 15 min auf 60 °C, ließ dann auf 55 °C abkühlen und tropfte anschließend innerhalb 7 min 15.3 g Bromessigsäuremethylester (100 mmol) unverdünnt zu, wobei die Temperatur durch externe Kühlung bei 65 °C gehalten wurde. Dann wurde die Mischung 15 min bei 50 °C gerührt. Nach Abkühlung auf 0 °C fügte man 10.7 g Octanal (83 mmol) unverdünnt zu, wobei die Temperatur durch externe Kühlung bei 5 °C gehalten wurde. Nachdem 30 min bei 5 °C, 2 h bei 25 °C und 20 min bei 40 °C gerührt wurde, kühlte man die Mischung auf 0 °C ab, säuerte mit 30 ml 10 %-iger Salzsäure bis zu einem pH-Wert von 1 an und rührte die Mischung 10 min. Überschüssiges Zink wurde anschließend abfiltriert und die organische Phase abgetrennt. Die organische Phase wurde dann bei 0 °C mit 10 ml konzentrierter Ammoniak-Lösung 10 min gerührt. Nach Phasentrennung wurde über Natriumsulfat getrocknet und das Lösungsmittel im Vakuum abdestilliert. 3-Hydroxydecansäuremethylester wurde in einer Ausbeute von 14.2 g (84 % d. Th.) mit einem Siedepunkt von 59 °C (0.04 mbar) erhalten.

Analoge Herstellung in dem Lösungsmittel Isopropylacetat lieferte 3-Hydroxydecansäuremethylester in einer Ausbeute von 15.6 g (87 % d. Th.).

### Vergleichsbeispiel 4:

### Herstellung von 3-Hydroxy-3-(2-phenylethyl)hexansäuremethylester

Bei Raumtemperatur wurden in einem Dreihalskolben mit Rückflußkühler, Innenthermometer, Tropftrichter und Rührer unter Stickstoff-Schutzgas 7.9 g Zinkpulver (121 mmol) in 45 ml Isopropylacetat vorgelegt. Nachdem 1.83 ml Trimethylchlorsilan (12.6 mmol) zugefügt wurden, erwärmte man die Mischung 15 min auf 60 °C, ließ dann auf 55 °C abkühlen und fügte innerhalb 5 min 17.7 g Bromessigsäuremethylester (115 mmol) zu, wobei die Temperatur der Mischung durch externe Kühlung bei 60 °C gehalten wurde. Dann wurde die Mischung 15 min bei 50 °C gerührt. Nach Abkühlung auf 40 °C fügte man 15.7 g 1-Phenylhexan-3-on (89 mmol, hergestellt durch basenkatalysierte Aldolkondensation von Benzaldehyd und Pentan-2-on und anschließender Hydrierung des erhaltenen 1-Phenylhex-1-en-3-on) unverdünnt zu, wobei die Temperatur durch externe Kühlung bei 50 °C gehalten wurde. Anschließend wurde die Mischung 45 min bei 60 °C gerührt und nach Abkühlung auf 15 °C mit 20 ml 20 %-iger Salzsäure bis zu einem pH-Wert von 1 angesäuert und 30 min gerührt. Überschüssiges Zink wurde anschließend abfiltriert und die organische Phase abgetrennt. Die organische Phase wurde dann bei 0 °C mit 30 ml konzentrierter Ammoniak-Lösung 10 min gerührt. Nach Phasentrennung wurde über Natriumsulfat getrocknet und das Lösungsmittel im Vakuum abdestilliert. 3-Hydroxy-3-(2-phenylethyl)hexansäuremethylester wurde in einer Ausbeute von 21.1 g (95 % d. Th.) und einer Reinheit von > 95 % (HPLC) erhalten.

### Beispiel 5:

### Herstellung von 4-Hydroxy-4-phenylbuttersäuremethylester

Bei Raumtemperatur wurden in einem Dreihalskolben mit Rückflußkühler, Innenthermometer, Tropftrichter und Rührer unter Stickstoff-Schutzgas 15.1 g Zinkpulver (231 mmol) in 90 ml Isopropylacetat vorgelegt. Nachdem 3.7 ml Trimethylchlorsilan (29 mmol) zugefügt wurden, erwärmte man die Mischung 20 min auf 60 °C, ließ dann auf 55 °C abkühlen und tropfte anschließend innerhalb 10 min 32.6 g Bromessigsäuremethylester (213 mmol) unverdünnt zu, wobei die Temperatur durch externe Kühlung bei 60 °C gehalten wurde. Dann wurde die Mischung 15 min bei 50 °C gerührt. Nach Abkühlung auf 5 °C fügte man 21.3 g Styroloxid (178 mmol) unverdünnt zu, wobei die Temperatur durch externe Kühlung bei 5 °C gehalten wurde. Nachdem 30 min bei 5 °C gerührt wurde, erwärmte man die Mischung innerhalb 20 min auf 25 °C und rührte noch 30 min bei dieser Temperatur. Nach Abkühlung auf 0 °C wurde mit 33 ml 20 %-iger Salzsäure bis zu einem pH-Wert von 1 angesäuert und 30 min gerührt. Überschüssiges Zink wurde anschließend abfiltriert und die organische Phase abgetrennt. Die organische Phase wurde dann bei 0 °C mit 40 ml 1 N Salzsäure gerührt und abschließend mit 20 ml konzentrierter Ammoniak-Lösung gewaschen. Nach Phasentrennung wurde über Natriumsulfat getrocknet und das Lösungsmittel im Vakuum abdestilliert (das Lösungsmittel Isopropylacetat wurde zu > 90 % zurückgewonnen). Nach Destillation wurde 4-Hydroxy-4-phenylbuttersäuremethylester in einer Ausbeute von 30.9 g (90 % d. Th.) mit einem Siedepunkt von 128 °C (4 mbar) erhalten.

Analoge Herstellung in den Lösungsmitteln n-Butylacetat, Ethylacetat und Methylacetat lieferte 4-Hydroxy-4-phenylbuttersäuremethylester in Ausbeuten von 29.5 g, 29.8 g und 28.1 g (86, 87 bzw. 82 % d. Th.).

### Vergleichsbeispiel 6:

### Herstellung von 3-(N-Phenylamino)-3-phenylpropionsäuremethylester

Bei Raumtemperatur wurden in einem Dreihalskolben mit Rückflußkühler, Innenthermometer, Tropftrichter und Rührer unter Stickstoff-Schutzgas 7.6 g Zinkpulver (116 mmol) in 45 ml Isopropylacetat vorgelegt. Nachdem 1.83 ml Trimethylchlorsilan (14.4 mmol) zugefügt wurden, erwärmte man die Mischung 15 min auf 60 °C, ließ dann auf 55 °C abkühlen und tropfte anschließend innerhalb 5 min 16.3 g Bromessigsäuremethylester (107 mmol) unverdünnt zu, wobei die Temperatur durch externe Kühlung bei 60 °C gehalten wurde. Dann wurde die Mischung 15 min bei 50 °C gerührt. Nach Abkühlung auf 5 °C fügte man 16.1 g Benzalanilin (89 mmol), gelöst in 10 ml Isopropylacetat, zu, und erwärmte die Mischung auf 25 °C. Nachdem die Mischung 1 h bei 25 °C gerührt wurde, erwärmte man noch 10 min auf 40 °C und kühlte dann die Mischung auf 5 °C ab. Anschließend wurde mit 80 ml konzentrierter Ammoniak-Lösung hydrolysiert. Nachdem 40 ml Isopropylacetat zugefügt wurden, erwärmte man auf 50 °C, wobei gebildeter Niederschlag in Lösung ging. Bei dieser Temperatur wurde überschüssiges Zink abfiltriert und die organische Phase abgetrennt. Anschließend wurde die organische Phase bei 50 °C mit 20 ml Wasser gewaschen. Nach Phasentrennung wurde das Lösungsmittel im Vakuum abdestilliert, wobei ein Rohprodukt in einer Ausbeute von 19.7 g (87 % d. Th.) und einer Reinheit von > 95 % (HPLC) erhalten wurde. Nach Umkristallisation aus Ethylacetat wurde 3-(N-Phenylamino)-3-phenylpropionsäuremethylester mit einem Schmelzpunkt von 110 °C erhalten.

### Vergleichsbeispiel 7:

### Herstellung von 4-Hydroxy-4-phenylbuttersäuremethylester nach SU 472127

Bei Raumtemperatur wurden in einem Dreihalskolben mit Rückflußkühler, Innenthermometer, Tropftrichter und Rührer unter Stickstoff-Schutzgas 12.1 g Zinkpulver (185 mmol) in 80 ml Ethylacetat vorgelegt. Nachdem 2.5 ml Trimethylchlorsilan (20 mmol) zugefügt wurden, erwärmte man die Mischung 20 min auf 60 °C, ließ dann auf 55 °C abkühlen und tropfte anschließend innerhalb 15 min eine Mischung aus 26.1 g Bromessigsäuremethylester (170 mmol) und 17 g Styroloxid (142 mmol) zu, wobei die Temperatur bei 65 °C gehalten wurde. Dann wurde die Mischung 60 min bei 60 °C gerührt. Nach Abkühlung auf 0 °C wurde mit 24 ml 20 %-iger Salzsäure bis zu einem pH-Wert von 3 angesäuert und 10 min gerührt. Überschüssiges Zink wurde anschließend abfiltriert und die organische Phase abgetrennt. Die organische Phase wurde dann bei 0 °C mit 30 ml 1 N Salzsäure gerührt und abschließend mit 15 ml konzentrierter Ammoniak-Lösung gewaschen. Nach Phasentrennung wurde über Natriumsulfat getrocknet und das Lösungsmittel im Vakuum abdestilliert. In der erhaltenen Mischung war 4-Hydroxy-4-phenylbuttersäuremethylester analytisch nicht nachweisbar.

## Patentansprüche

1. Verfahren zur Herstellung von Keto- und Hydroxyverbindungen, **dadurch gekennzeichnet, dass** in einem ersten Schritt ein Organozinkhalogenid aus einer reaktiven Halogenverbindung mit Zink in einem oder mehreren Carbonsäureestern hergestellt werden, in einem zweiten Schritt das erhaltene Organozinkhalogenid mit einem elektrophilen Reaktionspartner ausgewählt aus der Gruppe enthaltend Epoxid, Nitril oder Carbonsäurehalogenid umgesetzt wird und in einem dritten Schritt das Reaktionsprodukt des zweiten Schritts hydrolisiert wird.

2. Verfahren nach Anspruch 1, wobei im ersten Schritt Organozinkhalogenide der allgemeinen Formel (4)
HalZn-R³R⁴C-(X)₁-Y (4)
durch Umsetzung mit Zink und einer reaktiven Halogenverbindungen der allgemeinen Formel (2)
Hal-R³R⁴C-(X)₁-Y (2)
hergestellt werden, wobei
**R**^{**1**} und **R**^{**2**} Wasserstoff oder einen gegebenenfalls halogen- oder cyanosubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können,
**R**^{**3**}**, R**^{**4**}**, R**^{**5**}**, R**^{**6**} und **R**^{**7**} Wasserstoff, Halogen oder einen gegebenenfalls halogensubstituierten oder cyanosubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können,
**X** ausgewählt wird aus 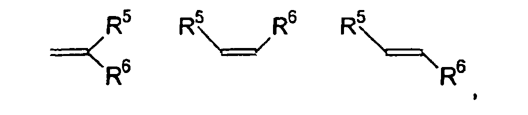 **l** eine ganze Zahl im Wert von 0 oder 1 sein kann,
**Y** CN, (C=O)-Z, (SO₂)-Z, (P=O)(-Z)₂, R⁵C=CR⁶R⁷, C≡C-R⁵
oder ein aromatischer Rest, wobei eine oder mehrere Methineinheiten im Ring durch Gruppen -N= oder -P= ersetzt sein können und der im Ring die Heteroatome 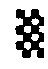 O-, -S- oder 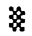 NH- tragen kann, wobei der aromatische Ring gegebenenfalls halogen- oder cyanosubstituiert oder durch C₁-C₃₀-Kohlenwasserstoffreste, in denen eine oder mehrere, einander nicht benachbarte Methyleneinheiten durch Gruppen -O-, -CO-, -COO-, -OCO-, oder -OCOO-, -S- oder -N**R**^{**x**}- ersetzt sein können, substituiert ist,
**Z** einen gegebenenfalls halogensubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S- oder -N**R**^{**x**}- ersetzt sein können und in dem eine oder mehrere Methineinheiten durch Gruppen -N= oder -P= ersetzt sein können, OH, OR¹, OSi(R³)₃, NHR¹ oder NR¹R²,
**Hal** Chlor, Brom oder Iod bedeutet,
**R**^{**x**} Wasserstoff oder einen gegebenenfalls halogensubstituierten C₁-C₃₀-Kohlenwasserstoffrest, in dem eine oder mehrere, einander nicht benachbarte Methyleneinheiten durch Gruppen -O-, -CO-, -COO-, -OCO-, oder -OCOO-, -S-, -NH- oder -N-C₁-C₂₀-Alkyl ersetzt sein können und in dem eine oder mehrere Methineinheiten durch Gruppen -N= oder -P= ersetzt sein können, und
jeweils 2 Reste, die ausgewählt werden aus den Paaren R¹ und R², R³ und R⁴, R⁴ und R⁵, R⁵ und R⁶, R⁶ und R⁷, R¹ und R³, R¹ und Y, R¹ und Z, R³ und Y, R³ und Z, R⁵ und Y, R⁵ und Z, wobei Z eine direkte Bindung bedeuten kann, miteinander verknüpft sein können.

3. Verfahren nach Anspruch 1 oder 2, **dadurch gekennzeichnet, dass** Carbonsäureestern der allgemeinen Formel (3)
R⁸-((O(CH₂)ₘ)ₙ-COO-((CH₂)ₒ-COO)ₚ-((CH₂)_{q}O)ᵣ-R⁹ (3)
verwendet werden, wobei
**R**^{**8**} und **R**^{**9**} einen C₁-C₃₀-Kohlenwasserstoffrest, in dem eine oder mehrere, einander nicht benachbarte Methyleneinheiten durch Gruppen -O- ersetzt sein können, und
**m, n, o, p, q**, und **r** ganze Zahlen im Wert von 0 bis 6 bedeuten.

4. Verfahren nach Anspruch 1 bis 3, bei dem als reaktive Halogenverbindungen Bromverbindungen eingesetzt werden.

5. Verfahren nach Anspruch 1 bis 4, bei dem als reaktive Halogenverbindungen α-Bromcarbonsäureester eingesetzt werden.

6. Verfahren nach Anspruch 1 bis 5, bei dem der Carbonsäureester ausgewählt wird aus Methyl-, Ethyl-, n-Propyl-, i-Propyl-, n-Butyl-, 1-Butyl-, t-Butyl-, n-Hexyl-, n-Pentyl-, i-Pentylacetat, -propionat und -butyrat und Essigsäurealkyl(C₆-C₁₄)ester-Gemischen.

7. Verfahren nach Anspruch 1 bis 6, **dadurch gekennzeichnet, dass** das eingesetzte Zink mit Trimethylchlorsilan aktiviert wird.

8. Verfahren nach Anspruch 1 bis 7, **dadurch gekennzeichnet, dass** Keto- und, Hydroxyverbindungen der allgemeinen Formel (1),
R¹(R²)ₖC(W^{x})-R³R⁴C-(X)₁-Y (1)
hergestellt werden, wobei im zweiten Schritt als elektrophile Reaktionspartner Epoxide der allgemeinen Formel (5b) 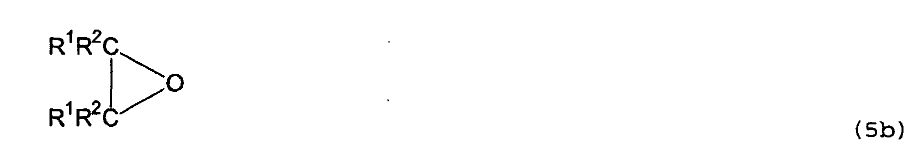 oder Nitrile der allgemeinen Formel (5c)
R¹C≡N (5c)
oder Carbonsäurehalogenide der allgemeinen Formel (5d)
R¹(C=O)-Hal (5d)
verwendet werden, wobei
**W**^{**x**} OH, NHR¹ oder =O und
**k** für W^{x} gleich OH und NHR¹ den Wert 1 und für W^{x} gleich =O den Wert 0 haben soll, und
die übrigen Reste, die in Anspruch 2 beschriebene Bedeutung haben sollen, sowie
jeweils 2 Reste, die ausgewählt werden aus den Paaren R¹ und R², R³ und R⁴, R⁴ und R⁵, R⁵ und R⁶, R⁶ und R⁷, R¹ und R³, R¹ und Y, R¹ und Z, R³ und Y, R³ und Z, R⁵ und Y, R⁵ und Z, W^{x} und Y sowie W^{x} und Z, wobei W^{x} O- oder NR¹- bedeutet und Z eine direkte Bindung bedeuten kann, miteinander verknüpft sein können.

## Claims

1. Process for preparing keto and hydroxyl compounds, **characterized in that** an organozinc halide is prepared in a first step from a reactive halogen compound and zinc in one or more carboxylic esters, the organozinc halide obtained is reacted in a second step with an electrophilic reaction partner selected from the group consisting of epoxide, nitrile or carboxylic halide and the reaction product of the second step is hydrolysed in a third step.

2. Process according to Claim 1, in which, in the first step, organozinc halides of the general formula (4)
HalZn-R³R⁴C-(X)₁-Y (4)
are prepared by reacting with zinc and a reactive halogen compounds [sic] of the general formula (2)
Hal-R³R⁴C-(X)₁-Y (2)
where
R¹ and R² are each hydrogen or an optionally halogen- or cyano-substituted C₁-C₃₀-hydrocarbon radical in which one or more nonadjacent methylene units may be replaced by -O-, -CO-, -COO-, -OCO-, or -OCOO-, -S- or -NR^{x}- groups and in which one or more methine units may be replaced by -N= or -P= groups,
R³, R⁴, R⁵, R⁶ and R⁷ are each hydrogen, halogen or an optionally halogen-substituted or cyano-substituted C₁-C₃₀-hydrocarbon radical in which one or more nonadjacent methylene units may be replaced by -O-, -CO-, -COO-, -OCO-, or -OCOO-, -S- or -NR^{x}- groups and in which one or more methine units may be replaced by -N= or -P= groups,
X is selected from 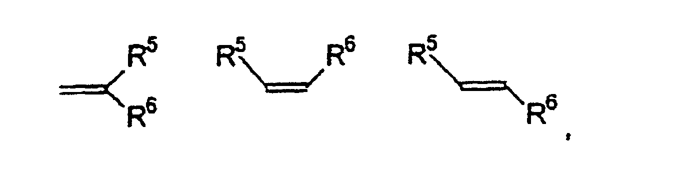 l is an integer having the value 0 or 1,
Y is CN, (C=O)-Z, (SO₂)-Z, (P=O) (-Z)₂, R⁵C=CR⁶R⁷, C≡C-R⁵ or an aromatic radical in which one or more methine units in the ring may be replaced by -N= or -P= groups and which may carry the heteroatoms -O-, -S- or -NH- in the ring, where the aromatic ring is optionally halogen- or cyano-substituted or is substituted by C₁-C₃₀-hydrocarbon radicals in which one or more nonadjacent methylene units may be replaced by -O-, -CO-, -COO-, -OCO-, or -OCOO-, -S- or -NR^{x}- groups,
Z is an optionally halogen-substituted C₁-C₃₀-hydrocarbon radical in which one or more nonadjacent methylene units may be replaced by -O-, -CO-, -COO-, -OCO-, -OCOO-, -S- or -NR^{x}- groups and in which one or more methine units may be replaced by -N= or -P= groups, OH, OR¹, OSi(R³)₃, NHR¹ or NR¹R²,
Hal is chlorine, bromine or iodine,
R^{x} is hydrogen or an optionally halogen-substituted C₁-C₃₀-hydrocarbon radical in which one or more nonadjacent methylene units may be replaced by -O-, -CO-, -COO-, -OCO-, or -OCOO-, -S-,-NH- or -N-C₁-C₂₀-alkyl groups and in which one or more methine units may be replaced by -N= or -P= groups, and
pairs of radicals selected from R¹ and R², R³ and R⁴, R⁴ and R⁵, R⁵ and R⁶, R⁶ and R⁷, R¹ and R³, R¹ and Y, R¹ and Z, R³ and Y, R³ and Z, R⁵ and Y, R⁵ and Z, where Z may be a direct bond, may in each case be linked to each other.

3. Process according to Claim 1 or 2, **characterized in that** carboxylic esters of the general formula (3)
R⁸-((O(CH₂)ₘ)ₙ-COO-((CH₂)ₒ-COO)ₚ-((CH₂)_{q}O)ᵣ-R⁹ (3)
are used, where
R⁸ and R⁹ are each a C₁-C₃₀-hydrocarbon radical in which one or more nonadjacent methylene units may be replaced by -O- groups, and
m, n, o, p, q and r are each integers having values of from 0 to 6.

4. Process according to Claims 1 to 3, in which bromine compounds are used as the reactive halogen compounds.

5. Process according to Claims 1 to 4, in which α-bromocarboxylic esters are used as the reactive halogen compounds.

6. Process according to Claims 1 to 5, in which the carboxylic ester is selected from methyl, ethyl, n-propyl, i-propyl, n-butyl, i-butyl, t-butyl, n-hexyl, n-pentyl, i-pentyl acetate, propionate and butyrate and (C₆-C₁₄)-alkyl acetate mixtures.

7. Process according to Claims 1 to 6, **characterized in that** the zinc used is activated using trimethylchlorosilane.

8. Process according to Claim 1 to 7, **characterized in that** keto and hydroxyl compounds of the general formula (1)
R¹(R²)ₖC(W^{x})-R³R⁴C-(X)₁-Y (1)
are prepared, wherein the electrophilic reaction partner used in the second step is
an epoxide of the general formula (5b) 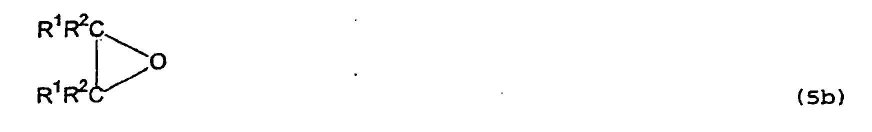 or a nitrile of the general formula (5c)
R¹C≡N (5c)
or a carboxylic halide of the general formula (5d)
R¹(C=O)-Hal (5d)
where
W^{x} is OH, NHR¹ or =O and
k, when W^{x} is OH and NHR¹, should have the value 1
and, when W^{x} is =O, should have the value 0, and
the remaining radicals should be as defined in Claim 2, and also
pairs of 2 radicals selected from R¹ and R², R³ and R⁴, R⁴ and R⁵, R⁵ and R⁶, R⁶ and R⁷, R¹ and R³, R¹ and Y, R¹ and Z, R³ and Y, R³ and Z, R⁵ and Y, R⁵ and Z, W^{x} and Y and also W^{x} and Z, where W^{x} is O- or NR¹- and Z may be a direct bond, may each be linked to each other.

## Revendications

1. Procédé pour la préparation de composés céto et hydroxy, **caractérisé en ce qu'**on prépare, dans une première étape, un halogénure organozincique à partir d'un composé halogéné réactif avec du zinc dans un ou plusieurs esters d'acide carboxylique, dans une deuxième étape, on transforme l'halogénure organozincique obtenu avec un partenaire de réaction électrophile choisi dans le groupe contenant les époxydes, les nitriles ou les halogénures d'acide carboxylique et, dans une troisième étape, le produit de réaction de la deuxième étape est hydrolysé.

2. Procédé selon la revendication 1, dans lequel on prépare, dans une première étape, des halogénures organozinciques de formule générale (4)
HalZn-R³R⁴C-(X)₁-Y (4)
par transformation avec du zinc et un composé halogéné réactif de formule générale (2)
Hal-R³R⁴C-(X)₁-Y (2)
R¹ et R² signifiant hydrogène ou un radical hydrocarboné en C₁ à C₃₀, le cas échéant substitué par halogène ou cyano, dans lequel une ou plusieurs unités méthylène non adjacentes peuvent avoir été remplacées par des groupements -O-, -CO-, -COO-, -OCO- ou -OCOO-, -S- ou -NR^{x}- et dans lequel une ou plusieurs unités méthine peuvent avoir été remplacées par des groupements -N= ou -P=,
R³, R⁹, R⁵, R⁶ et R⁷ signifiant hydrogène, halogène ou un radical hydrocarboné en C₁ à C₃₀, le cas échéant substitué par halogène ou cyano, dans lequel une ou plusieurs unités méthylène non adjacentes peuvent avoir été remplacées par des groupements -O-, -CO-, -COO-, -OCO- ou -OCOO-, -S- ou -NR^{x}- et dans lequel une ou plusieurs unités méthine peuvent avoir été remplacées par des groupements -N= ou -P=,
X est choisi parmi 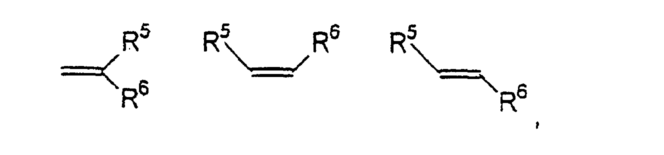 l pouvant être un nombre entier de valeur 0 ou 1,
Y signifiant CN, (C=O)-Z, (SO₂)-Z, (P=O)(-Z)₂, R⁵C=CR⁶R⁷, C≡C-R⁵ ou un radical aromatique, une ou plusieurs unités méthine dans le cycle pouvant avoir été remplacées par des groupements -N= ou -P= et pouvant porter dans le cycle les hétéroatomes -O-, -S- ou -NH-, le cycle aromatique étant le cas échéant substitué par halogène ou cyano ou par des radicaux hydrocarbonés en C₁ à C₃₀, dans lesquels une ou plusieurs unités méthylène non adjacentes peuvent avoir été remplacées par des groupements -O-, -CO-, -COO-, -OCO- ou -OCOO-, -S- ou -NR^{x},
Z signifiant un radical hydrocarboné en C₁ à C₃₀, le cas échéant substitué par halogène, dans lequel une ou plusieurs unités méthylène non adjacentes peuvent avoir été remplacées par des groupements -O-, -CO-, -COO-, -OCO- ou -OCOO-, -S- ou -NR^{x}, et dans lequel une ou plusieurs unités méthine peuvent avoir été remplacées par des groupements -N= ou -P=, OH, OR¹, OSi(R³)₃, NHR¹ ou NR¹R²,
Hal signifiant chlore, brome ou iode,
R^{x} signifiant hydrogène ou un radical hydrocarboné en C₁ à C₃₀ le cas échéant substitué par halogène, dans lequel une ou plusieurs unités méthylène non adjacentes peuvent avoir été remplacées par des groupements -O-, -CO-, -COO-, -OCO- ou -OCOO-, -S-, -NH- ou -N- (alkyle en C₁ à C₂₀) et dans lequel une ou plusieurs unités méthine peuvent avoir été remplacées par des groupements -N= ou -P=, et à chaque fois 2 radicaux, qui sont choisis parmi les paires R¹ et R², R³ et R⁴, R⁴ et R⁵, R⁵ et R⁶, R⁶ et R⁷, R¹ et R³, R¹ et Y, R¹ et Z, R³ et Y, R³ et Z, R⁵ et Y, R⁵ et Z, Z pouvant signifier une liaison directe, peuvent avoir été liés l'un à l'autre.

3. Procédé selon la revendication 1 ou 2, **caractérisé en ce qu'**on utilise des esters d'acide carboxylique de formule générale (3)
R⁸-((O(CH₂)ₘ)ₙ-COO-((CH₂)ₒ-COO)ₚ-((CH₂)_{q}O)ᵣ-R⁹ (3)
R⁸ et R⁹ signifiant un radical hydrocarboné en C₁ à C₃₀, dans lequel une ou plusieurs unités méthylène non adjacentes peuvent avoir été remplacées par des groupements -O- et
m, n, o, p, q et r signifiant des nombres entiers d'une valeur de 0 à 6.

4. Procédé selon les revendications 1 à 3, dans lequel on utilise comme composés halogénés réactifs des composés du brome.

5. Procédé selon les revendications 1 à 4, dans lequel on utilise comme composés halogénés réactifs des esters d'acide α-bromocarboxylique.

6. Procédé selon les revendications 1 à 5, dans lequel l'ester d'acide carboxylique est choisi parmi l'acétate, le propionate et le butyrate de l'ester méthylique, éthylique, n-propylique, i-propylique, n-butylique, i-butylique, t-butylique, n-hexylique, n-pentylique, i-pentylique et les mélanges des esters alkyliques en C₆ à C₁₄ de l'acide acétique.

7. Procédé selon les revendications 1 à 6, **caractérisé en ce que** le zinc utilisé est activé avec du triméthylchlorosilane.

8. Procédé selon les revendications 1 à 7, **caractérisé en ce que** des composés céto et hydroxy de formule générale (1),
R¹(R²)ₖC(W^{x})-R³R⁴C-(X)₁-Y (1)
sont préparés, en utilisant dans la deuxième étape comme partenaires de réaction électrophiles des époxydes de formule générale (5b) 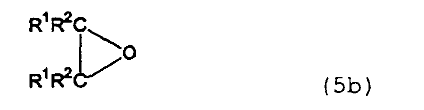 ou des nitriles de formule générale (5c)
R¹C≡N (5c)
ou des halogénures d'acide carboxylique de formule générale (5d)
R¹(C=O)-Hal (5d)
W^{x} signifiant OH, NHR¹ ou =O et
k aura la valeur 1 pour W^{x} représentant OH et NHR¹ et la valeur 0 pour W^{x} représentant =O, et
les autres radicaux, auront la signification décrite dans la revendication 2, ainsi qu'à chaque fois 2 radicaux, qui sont choisis parmi les paires R¹ et R², R³ et R⁴, R⁴ et R⁵, R⁵ et R⁶, R⁶ et R⁷, R¹ et R³, R¹ et Y, R¹ et Z, R³ et Y, R³ et Z, R⁵ et Y, R⁵ et Z, W^{x} et Y ainsi que W^{x} et Z, W^{x} signifiant O- ou NR¹- et Z pouvant signifier une liaison directe, peuvent avoir été liés l'un à l'autre.
